# EUROPEAN PATENT APPLICATION

(11) **EP 2 237 528 A1**
(43) Date of publication of application: **06.10.2010**
(21) Application number: 09250951.2
(22) Date of filing: 30.03.2009
(51) Int. Cl.: H04L 29/08, H04L 12/28, H04L 12/26

(54) **Method for listing content in a network**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

A home network has a plurality of nodes (3) for listing and distributing content stored on attached network devices (13). The nodes communicate with each other to provide notifications of the content available and are aware of their interconnecting network interfaces and data transfer rates. User devices (13) connect can connect to any of the nodes (3) in the home network and can request a listing of the network content. In response to receiving such a request, the local node retrieves a content listing of all content available on the network. The node then calculates the data transfer time for all of the content and groups the content according to the estimated time for delivery for selection by the user.

## Description

The present invention relates to home networks and in particular to processing the content available on the home network.

### Introduction

Computer networks are now common for connecting a variety of network aware consumer devices such as general computing devices like desktop computers and laptops, but also mobile telephones, games consoles, televisions and Blu-ray players.

To cater for the multitude of devices, it is now common for a plurality of network connectivity methods to be present within the home. For example, Wireless Local Area Network (WLAN) connectivity via 802.11g or wired connectivity via 802.3 Ethernet or "Power over Ethernet" (PoE).

With such connectivity options it is becoming increasingly common for a device in the network to have a choice of network links with which to communicate with another network device.

Typically wired links offer greater bandwidth than wireless links so they are preferential to wireless links.

However, wireless links can suffer degradation due to local conditions around the home, for example, the presence of microwaves or interference from overlapping networks or other wireless devices. Wired devices can also suffer from degradation due to interference from other power line Ethernet devices, electrical equipment on the mains.

Another benefit of greater connectivity around the home is that it is no longer necessary to have a central repository of information. Data can be distributed at different storage locations around the home and streamed to the other devices in the network.

In the invention, the home network consists of user devices and also a plurality of node caches. The nodes form a backbone in the network and each of the user devices are connected to one of the nodes. User devices do not communicate directly with each other via ad-hoc data connections but rather via the overall network mesh.

Since the node caches are not necessarily synchronised, a user device interrogating its local node will not be able determine the total content available to it on the network without mechanisms between the nodes to share content listings.

Additionally, even if the content is discoverable, it may not be transferable to the user device immediately. For example network congestion due to existing transfers or a link failure.

To overcome the above problems, the present invention continuously monitors the bandwidth available between nodes and for each link between. When a request for available data is generated by a user device, the node retrieves the content listing and further groups the retrieve data according to availability. By considering the content size and the current bandwidth within the mesh, the node can group the data according to whether or not it can be delivered within a predetermined time frame, for example within five minutes.

According to one aspect, the present invention provides a method according to claim 1.

According to a further aspect, the present invention provides a system according to claim 8.

According to a still further aspect, the present invention provides a network node according to claim 15.

Preferable features are as set out in the dependent claims.

Embodiments in accordance with the present invention will now be described with reference to the accompanying Figures in which:
Figure 1 schematically shows an overview of a home mesh according to a first embodiment;
Figure 2 schematically shows the components of one of the home nodes illustrated in Figure 1;
Figure 3 schematically shows the contents of the working memory illustrated in Figure 2;
Figure 4 is a flowchart showing the processing steps performed by each of the nodes illustrated in Figure 1 during an initialisation phase and during idle periods;
Figure 5 schematically shows the contents of the connectivity table illustrated in Figure 3;
Figure 6 is a flowchart showing the processing performed by each of the nodes during a content discovery process;
Figure 7 schematically shows the contents of the local content listing table illustrated in Figure 3;
Figure 8 schematically shows the contents of the remote content listing table illustrated in Figure 3;
Figure 9 is a flowchart showing the processing carried out by each of the nodes when a user requests a content listing;
Figure 10 is a flowchart showing the specific processing in step s49 of the flowchart in Figure 9;
Figure 11 schematically shows a first type of web page created after the processing of Figure 9;
Figure 12 schematically shows a second type of web page created after the processing of Figure 9;
Figure 13 is a flowchart showing the processing performed by the nodes when a user selects one of the clips available in the mesh;
Figure 14 shows an example of the bandwidth fluctuations experienced by the PoE and WLAN connections;
Figure 15 is a flowchart showing the processing of the nodes in a second embodiment of the present invention;
Figure 16 schematically shows the components of one of the nodes according to a fourth embodiment;
Figure 17 schematically shows the contents of a cache illustrated in Figure 16; and
Figure 18 is a flowchart showing the processing of a cache controller illustrated in Figure 16.

### First Embodiment

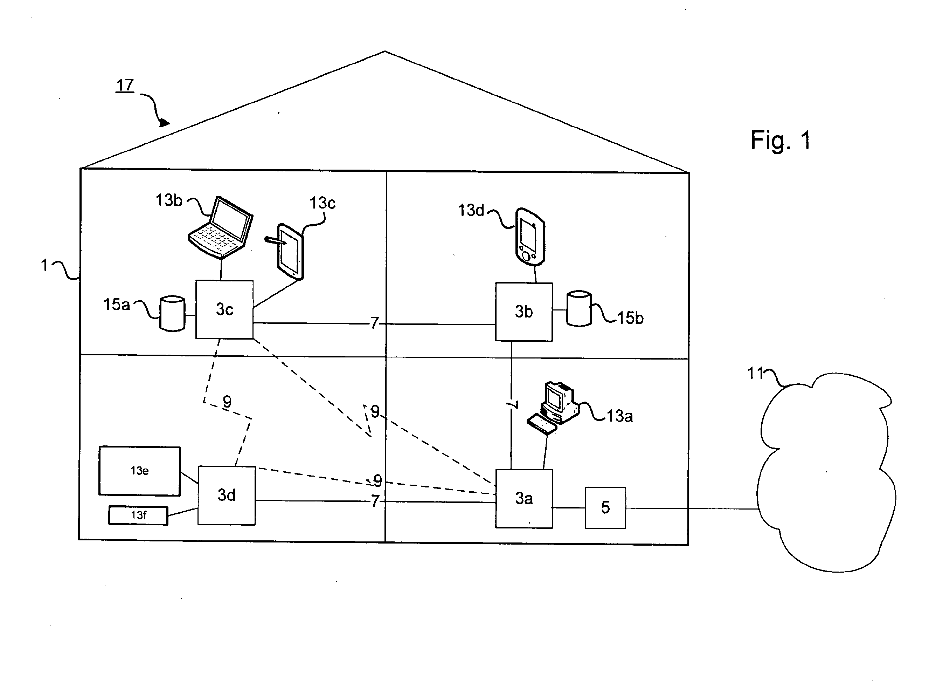

Figure 1 shows an example system according to a first embodiment. Inside a home 1, there is a network of home nodes 3a, 3b, 3c which are connected via PoE network 7 or a WLAN 9. One of the nodes, 3a is connected to an ADSL or Cable modem 5 in order to provide access to an external network such as the Internet 11.

User devices 13 connect to one of the home nodes 3 in the home network. Examples of user devices include a desktop computer 13a, a laptop computer 13b, a Personal Digital Assistant 13c and a Smartphone 13d, a High Definition televisions (HDTV's) 13e and a BT Vision set top box 13f. The user devices 13 connect to the home nodes 3 using USB2 or IEEE1394 Firewire connections.

Furthermore, storage devices 15a, 15b are connected to nodes 3c, 3b respectively and contain media content. Storage device 15a is an external hard drive whilst storage device 15b is a USB memory stick. Examples of other possible storage devices include NAS drives and CDROMS. In this embodiment, the storage devices connect to the home nodes using USB2, IEEE 1394 Firewire or Gigabit Ethernet.

The complete system of home nodes 3, user devices 13 and storage devices 15 will hereinafter be referred to as a home mesh 17.

As shown in Figure 1, node 3a is connected to the ADSL modem 4 to provide content from the Internet 11. Node 3a is also connected to nodes 3b and 3d via "Power over Ethernet" (PoE) connections 7 and to nodes 3c and 3d via WLAN links 9. Node 3b is connected to node 3a as mentioned earlier and also to node 3c by PoE. Node 3b does not have any WLAN connectivity because it does not have a WLAN adapter.

Node 3c is connected to node 3b via PoE and connected to nodes 3a and 3d via WLAN. Node 3d is connected to node 3a via PoE and also WLAN, has no direct connection to node 3b and is connected to node 3c by WLAN.

In a home mesh 17 system as set out above, it is possible to obtain a list of the multimedia content available across all devices in the mesh by querying any of the home nodes 3. It is still possible to navigate the various shared storage devices for content but by interacting with the home nodes which present a unified view of the content available in the mesh, the user does not need to know the location of any particular piece of content.

Since the content is distributed across a variety of different media at different network locations, there will not be a consistent time for accessing such data and therefore delivery of any requested content must be managed according to the transportation conditions.

Each home node is arranged to listen for user device requests for content listings and also for requests for information of media content available on the mesh.

Furthermore the nodes communicate with each other in order to discover what content is available and the location of that content. Similarly the nodes advertise what content is available.

Since data potentially needs to be transferred across the mesh between nodes, the nodes also need to be aware of the network characteristics between its neighbours. For example, the type of connection with its neighbours and the current available bandwidth, the level of existing traffic on each of the links with its neighbours etc.

The advantage of such network awareness is that the nodes are aware of the location of media content and can take steps to improve user access to the content by caching the data locally. Factors which determine whether data is cached include the size of the media clip, the predicted time required to transfer the data between nodes and the priority/popularity of the media clip.

### Nodes

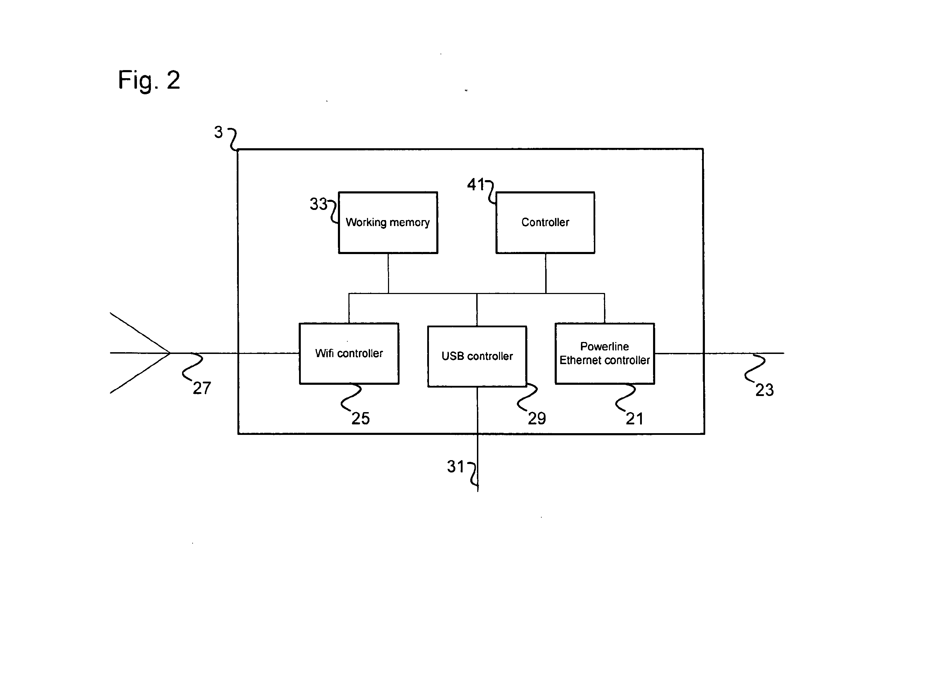

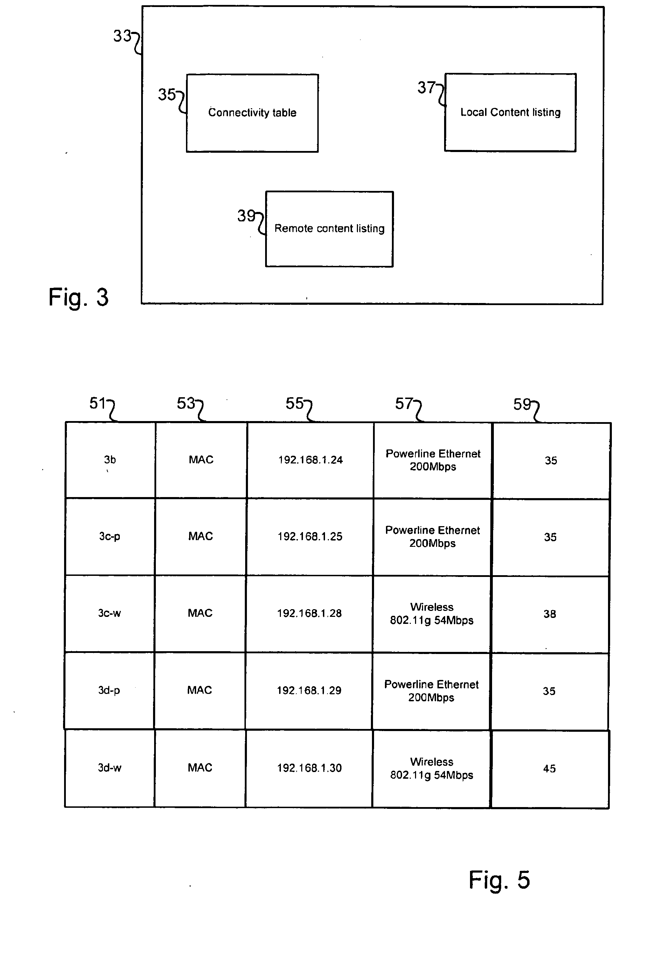

Figure 2 shows the internal structure of a node 3 forming the mesh in Figure 1. In this embodiment, each node 3 is a modified PoE adapter 21 capable of offering a maximum speed of 200 Mbps and connected to the home power lines via plug interface 23. In addition to the conventional Power over Ethernet (PoE) circuitry to connect to a home Ethernet system, the node also includes a wireless networking controller 25, in this case conforming to the 802.11g wireless standard, an aerial 27 and a USB2 controller 29. The USB2 controller may be internal or external to the unit and allows mass storage devices to connect to the node via interface 31. The node also contains a small RAM memory unit 33. As shown in Figure 3, the memory unit is arranged to store three main data tables: a connectivity table 35, a local content listing 37 and a remote content listing 39. These tables 35, 37, 39 are used by the nodes to carry out the functions of the mesh and will be described in more detail below.

A central controller 41 manages the overall operation of the node and coordinates inter-node communications.

In particular, the controller 41 is responsible for managing the data messages arriving and leaving the node. The controller is responsible for scheduling transfer of data, determining bandwidth and servicing requests for content listings and selected content by the user devices.

### Initialisation

The process of establishing the mesh once all the component parts have been physically connected will now be described. As in a conventional home network, the nodes are assigned an IP address from a DCHP server and the WLAN and PoE parts of the network operate using a common SSID.

In order to convert the home network into a home mesh, each node runs a discovery process to build up a better view of the neighbouring components. The results of the discovery process are stored in connectivity table 35.

The discovery process provides each node with knowledge of:
the identity and address of any neighbouring nodes in the mesh;
the types of connection between those neighbours (WLAN or wired);
the current available bandwidth of those connections.

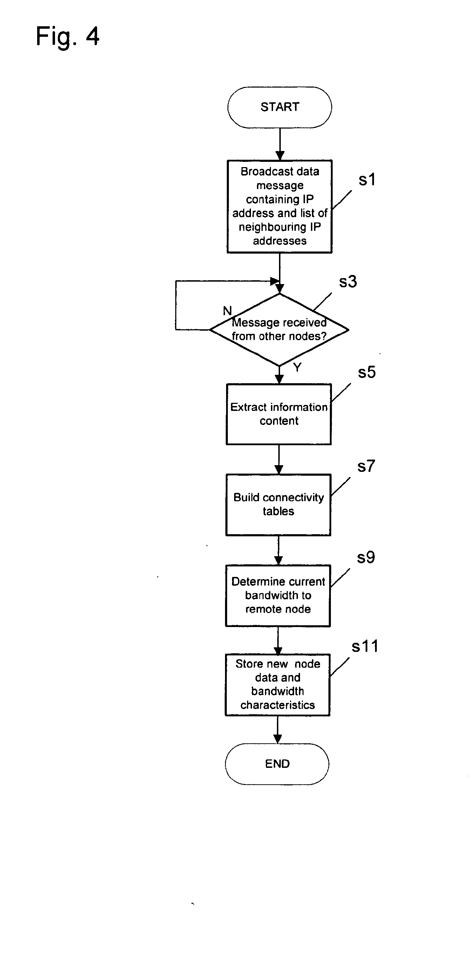

Figure 4 shows the discovery process performed by each of the nodes 3 in the mesh. The figure will be described with specific reference to node 3a for ease of explanation.

In step s1, the node 3a advertises its presence over all wired and wireless interfaces by sending a broadcast message containing its unique identifier and its IP address, or in cases where it has both wired and wireless capability, its IP addresses. The other nodes will also do the same although not at exactly the same time.

In step s3, after the broadcast message has been sent, the node 3a listens for broadcast messages from other nodes. If a message has been received, the processing proceeds to step s5. Otherwise the process loops on step s3. If a message has been received, in step s5 the information content of the received message is extracted to obtain the IP address(es) of another node in the mesh.

In step s7, the information is processed and stored in a connectivity table within the data tables 35 of the working memory 33.

Having determined the existence and identity of a remote node, in step s9 the node 3a determines the type of connection that exists to the remote node, (WLAN or PoE) and the maximum theoretical speed of the connection. In the mesh shown in Figure 1, connectivity is provided by an 802.11 g wireless network having a maximum speed of 54Mbps and a PoE network having a maximum theoretical speed of 200Mbps.

As mentioned above, the available bandwidth within the home mesh is not constant due to interference and existing data transfers. Therefore having determined the maximum theoretical speeds, the node initiates a transfer of null data to remote node to calculate the actual bandwidth at that moment in time. Due to interference in the home network, there is often a large mismatch between the theoretical bandwidth and the actual bandwidth available. Even 200Mbps PoE will often be slower than 54Mbps 802.11 g due to internal home wiring and the presence of electrical devices on the power ring.

Once the actual bandwidth calculations are complete, in step s11, the resulting figure is stored in the connectivity table 35 and processing ends.

The nodes are arranged to periodically broadcast their IP addresses and execute the processing shown in Figure 4. In this embodiment, the nodes are set to broadcast every second for the first minute after being initialised and then slow down to every minute afterwards to avoid excessive bandwidth usage. This enables each node to build up a complete view of the mesh. It also enables nodes to sense changes to the mesh, for example changes in the actual available bandwidth between nodes and also node failures or changes of IP address. It will be clear to the skilled person that where a node receives a broadcast message and the node information already exists in the data table, then the node updates existing values rather than creating a new entry in the data table. However the transmission of the broadcast message is a low priority task and can be suspended during user initiated data transfers as will be described later.

Figure 5 shows a view of the connectivity table for node 3a after the process of Figure 4 has been running for some time. The columns are arranged to store data as follows:
Column 51 - identity of a remote node;
column 53 - MAC address;
column 55 - IP address;
column 57 - type of connection and maximum theoretical bandwidth; and
column 59 - actual bandwidth.

As shown in Figure 5, the connectivity table of node 3a contains entries for the connections to nodes 3b via PoE, node 3c by PoE and WLAN, and node 3d by PoE and WLAN. Although the PoE connections should be much faster than the 802.11g WLAN connection, the actual figures show that the PoE is slower. This is due to the quality of the internal wiring in the home 1. The bandwidth of the PoE connections is consistent between all devices. However, the WLAN connection is different depending on the distance between the nodes.

### Content discovery

Once the connectivity table has been filled and appears to be stable, each node determines the content available on the mesh. This is divided into two phases: populating the local content listing 37 by identifying content that is contained in locally attached devices; and populating the remote content listing 39 by processing messages received from the remote nodes in the mesh.

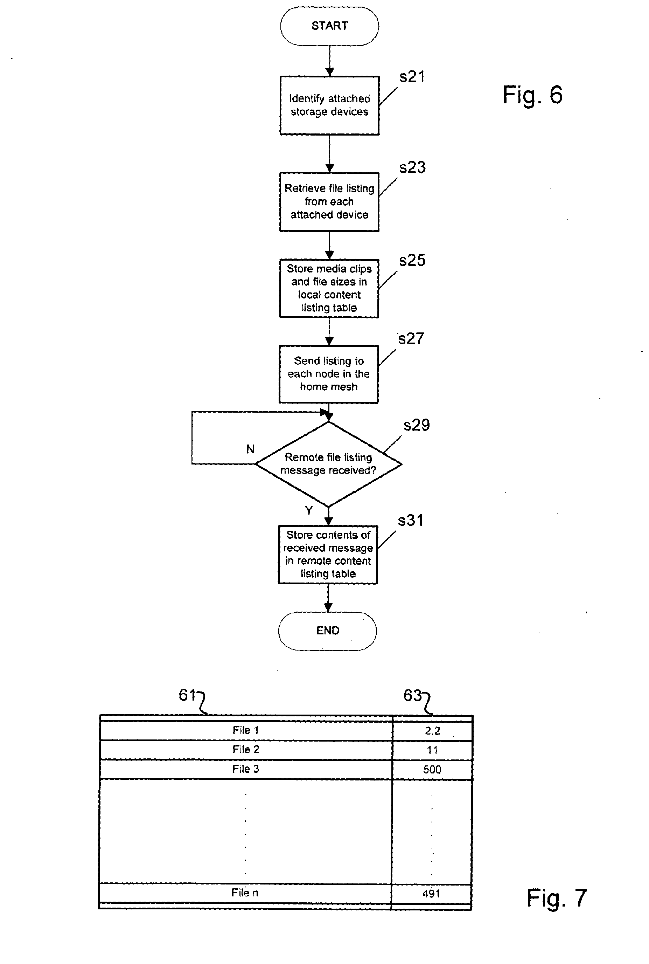

Figure 6 is a flowchart showing the processing steps performed by each local node. As with the previous flowchart, the processing will be explained with regard to node 3a. In step s21, the node 3a scans for any connected storage devices. In the case of node 3a, it identifies the hard drive of the attached computer 13a.

In step s23, node 3a performs a search for media content on any located storage devices. Since the mesh in this embodiment is concerned with media such as songs and videos, the search is restricted to audio and video file extensions.

In step s25, the results of the media search are stored in the local content listing 37. As shown in Figure 7, this table contains the file name of the media clip and also the respective file size. This is used by the nodes in later calculations described later.

Having determined the list of local content available, node 3a then shares this information with the neighbouring nodes by sending in step s27 data messages containing the contents of its local content listing table 37.

The other nodes will be performing the same processing and therefore in step s29, the node 3a listens for data messages containing information on the content listings of other nodes. If no messages are received, the process flow loops for a set amount of time before checking again.

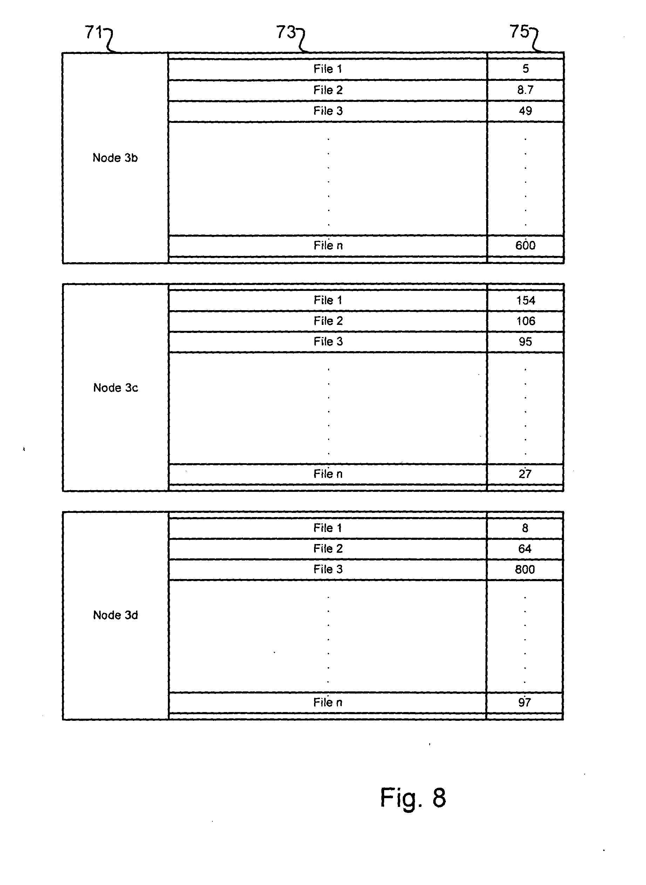

If a file listing message is received, at step s31 the contents are transferred to the remote content listing table 39. Figure 8 shows an example of the remote content listing table 39 after receiving data from nodes 3b, 3c and 3d.

As with the network discovery process, this content discovery process is periodically refreshed in order to update the local and remote content listings to ensure an accurate picture of the content available on the mesh. The total content may change as new content is introduced to the mesh, old content is removed from the mesh or as a node fails.

### Request for content listing

At any time after the nodes have performed network discovery and content discovery, user devices attached to the nodes can browse for content. In this embodiment the user devices connect to the nodes using USB2 wired connections having a bandwidth much higher than that of either wireless or wired Ethernet connections and therefore the connection between the user device and the home node will not be a bottleneck in the delivery of content.

In this embodiment, the user devices use a web browser program such as Microsoft Internet Explorer or Mozilla Firefox to access an exploration web page provided by their nearest node.

When a user device connects to one of the nodes in the mesh, that node (hereinafter referred to as the local node) becomes the access point to the mesh for the user device and handles communication with the user device and the content available on the mesh.

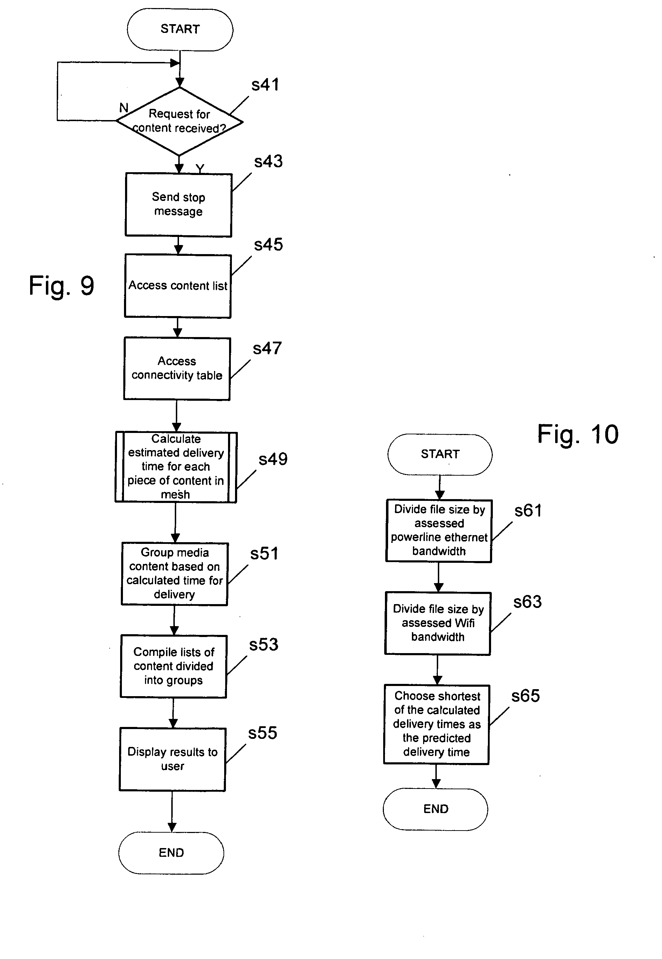

Figure 9 shows the processing of the node 3a for providing content listings to a user located at computer 13a. At step s41, the node 3a listens for requests and loops on this step until a request is received.

When a user device issues a request for media listings, at step s43, the node 3a sends a stop message to the other nodes in mesh. This ensures that all nodes stop any existing bandwidth assessments or place a block on initiating new bandwidth assessment procedures. This ensures that the idle period bandwidth assessments do not interfere with the transfer of media clip content.

In step s45, the node accesses its local content listing table 37 and the remote content listing table 39 to obtain a directory of the total content available at the mesh.

Instead of merely presenting all of this content to the user, the node is arranged to process this data to be more useful to the user.

As mentioned above, the nodes periodically assess the bandwidth available between each other. In step s47 the node 3a accesses its connectivity table to obtain this information and in step s49 using the accessed information of the file size and location of each file, calculates the transfer time for each of the files in the mesh.

The processing of step s49 is explained in more detail in Figure 10. In step s61, the processing unit 41 of the node takes the file size of the content and divides it by the assessed bandwidth of the PoE link to calculate a first estimated transfer time.

Next in step s63, the processing unit 41 of the node takes the file size of the content and divides it by the assessed bandwidth of the WLAN link to calculate a second estimated transfer time.

In step s65, the processing unit 41 compares the first and second estimated transfer times and chooses the shortest of the two calculated times. In this way, the node assesses which of the available links is currently faster and chooses the link which will provide the fastest delivery to the user.

Clearly for content located on a node which is only connected by one of PoE or WLAN, then only a single transfer time is calculated. Files which are located on locally attached storage devices can be transferred with minimal delay.

Returning to Figure 9, after the fastest delivery time has been calculated for each media clip, in step s51, the clips are grouped based on their estimated delivery time. In this embodiment, clips are grouped into those which can be transferred to the client within five minutes and those which cannot.

Having processed all of the files, the node 3a generates in step s53 a web page for presentation to the user showing the files which are available within five minutes and those files which will not be along with an estimation of the time for transfer. In step s55, the web page is displayed to the user located at computer 13a.

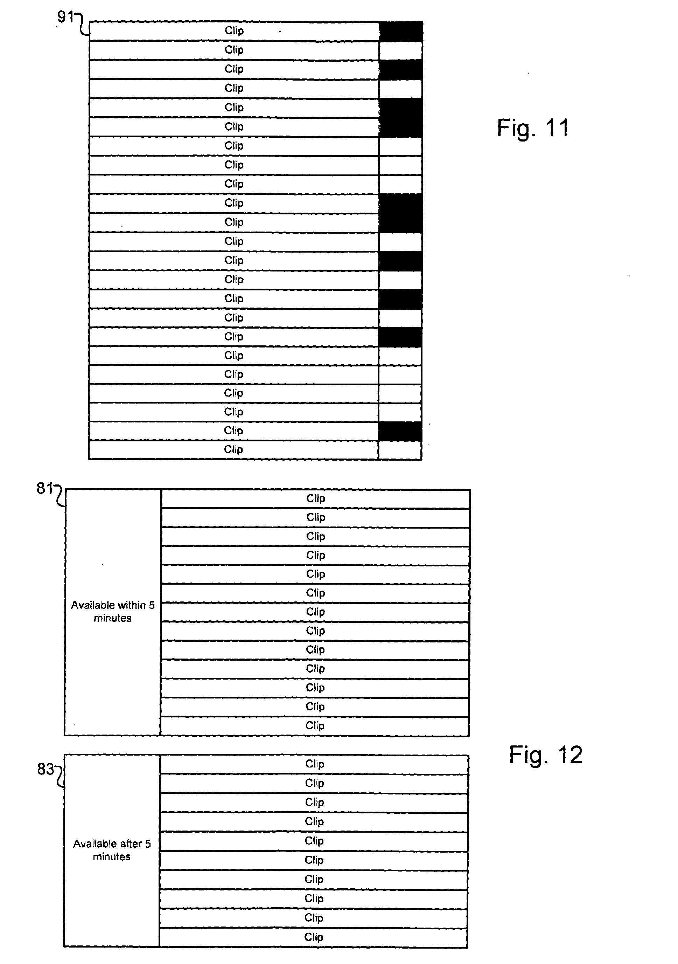

Figures 11 and 12 show two alternate views for the generated web page. In Figure 11, one view, the webpage shows the complete set of files with colour markers or highlighting to differentiate content which can be delivered within 5 minutes and those which cannot.

In Figure 12, another view is presented where the content listing is' split into two separate web pages, a first showing page a list of content which can be displayed within 5 minutes and a second page showing a list of content which will require more waiting time.

In both cases, the benefit to the user is that they receive a visual indication of the likely delivery time for any piece of content on the mesh. This allows them to complete other tasks while waiting for selected content to be delivered.

### Selection of media clip

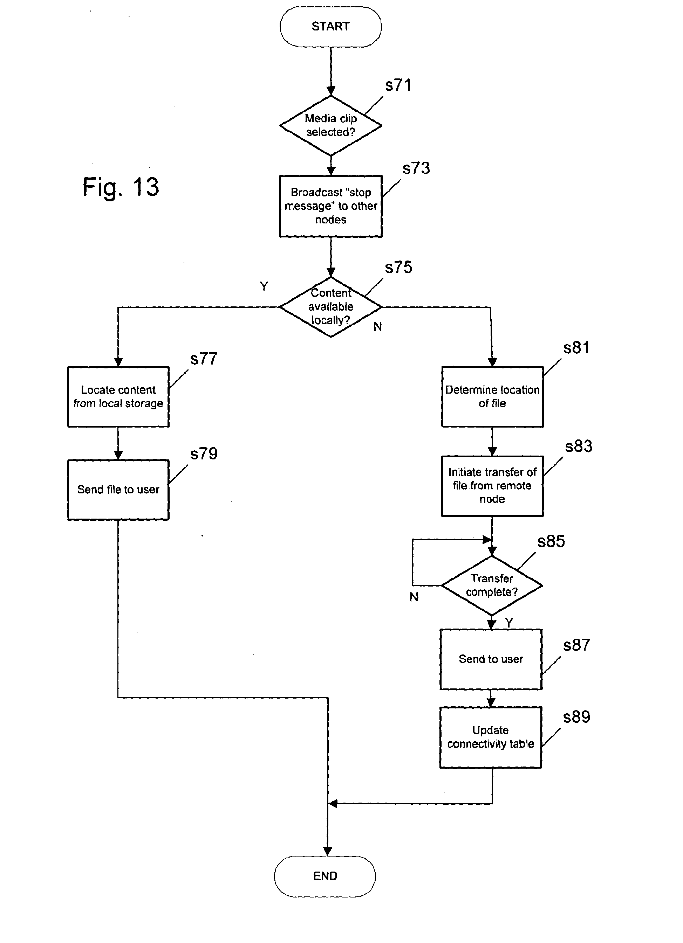

The processing performed by the node 3a after the content lists have been displayed to the user at computer 13a will now be described with reference to Figure 13.

In step s71, the node waits for the user to select a media clip in a loop. When a clip is selected, the node in step s73 broadcasts another stop message to prevent the other nodes from initiating or continuing the idle time low priority processes of network discovery and content discovery. It does not however affect transfers of any existing user initiated data transfers.

In step s75, the processor determines whether the content is available locally. If the content is available locally, processing proceeds to step s77 where the content is located on the local storage device, e.g. the hard drive of computer 13a and in step s79 the content is presented to the user using the appropriate programme.

If the content is not available locally, processing moves to step s81 where the location of the node managing the requested content is determined. Having located the content, in step s83, the node 3a initiates a transfer of the content from the remote node using the fastest link as determined during the processing of step s49 in Figure 9.

In step s85 the processor loops until the transfer is complete and the file is sent to the user in step s87 for presentation. As a final step s89, the connectivity table is updated since an actual data transfer rate has been determined.

### Second embodiment

In the first embodiment, the calculations of bandwidth between each link were used to estimate the time required to transfer each data clip. Whenever the network discovery process was performed, a new set of bandwidth figures were calculated and replaced the existing values.

In the second embodiment, the results of the bandwidth calculations are not discarded but used to build a profile of the usage of each link in the mesh at various times of the day. In this way, the controller can calculate the time for delivery of a media clip more accurately by taking into account trends in link usage.

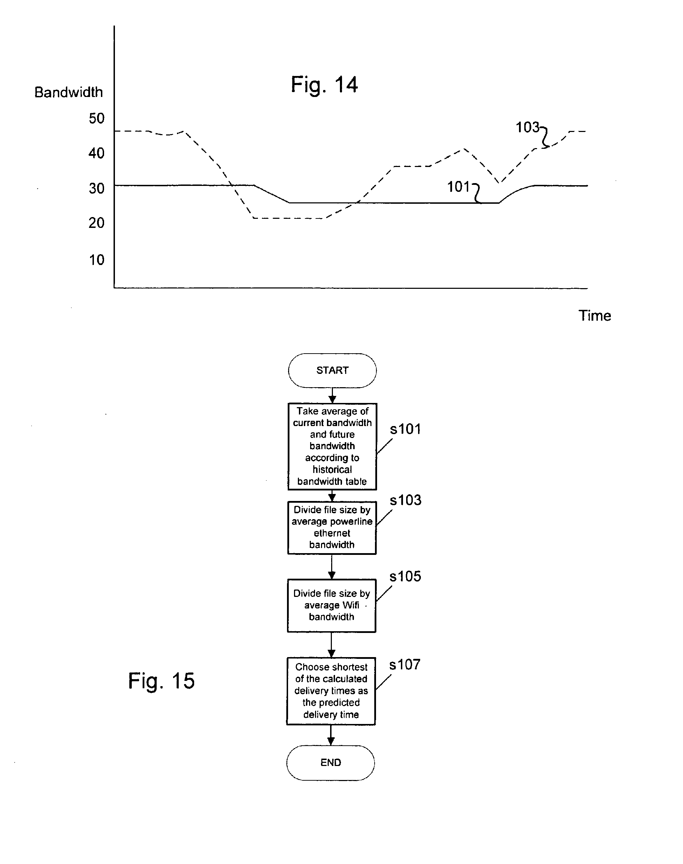

In this embodiment, each node contains a further table called the historical bandwidth table in working memory 33. Whenever a new bandwidth assessment is performed, instead of discarding the previous bandwidth results, they are stored in the historical bandwidth table along with the time of the assessment. An example of the fluctuations in the PoE and WLAN links that can occur between node 3a and node 3d are shown as a graph in Figure 14. In this Figure, it can be seen that the PoE bandwidth 101 is generally slower than the WLAN link at around 25-30 Mbps but does not vary significantly with time whereas the WLAN bandwidth 103 is often faster but changes more frequently, between 22 and 47Mbps. This may occur due to a regular source of interference at particular times of the day or due to a regular user initiated file transfer.

To establish whether there is a general trend or pattern of bandwidth availability, the historical bandwidth table collects bandwidth figures for a number of days and then calculates the average bandwidth at various points in the day, for example every hour.

As in the first embodiment, when the user requests a content listing, the node calculates the delivery time of each media file and groups the content into those which can be presented within 5 minutes and those which cannot. The processing performed by the node 3a is the generally the same as in Figure 9, but at step s49, instead of the processing shown in Figure 10, executes the processing shown in Figure 15. In step s101, the node calculates a predicted bandwidth for each of the PoE and WLAN links based on the current figure in the connectivity table and the likely future bandwidth as indicated by the historic bandwidth figures for the particular time of day.

Then in step s103, the predicted transfer time is calculated based on the new average PoE bandwidth and in step s105 the predicted transfer time is calculated based on the average WLAN bandwidth. In step s107 the shortest of the calculated times is set as the transfer time and processing returns to Figure 9.

As shown above, the node includes trend data from the historical data table in the calculations of likely delivery time of the content which may result in the content being classified in a different group.

### Third embodiment

In the above embodiments, the home mesh and nodes apply dynamic content masking to determine which media clips can be delivered and presented to a requesting user. In particular, a determination is made as to whether the entire clip can be transferred within a predetermined period of time.

Large files such as high quality video encoded with the H.264 compression scheme are typically several hundred megabytes in size and would take an exceptionally long time to be transferred to the user device across the mesh. To enable such videos to be presented without the user always having to wait for complete file transfer, streaming is used. In streaming, playback of the video is initiated before the entire file has been received. A buffer of data is created for the content and smooth playback can be achieved if the buffer can be replenished with new data at the same rate as it is consumed by the receiver. Once data has been displayed it can be discarded or kept for subsequent replay.

Streaming of data is more complex to manage since it involves determining not only whether the buffer can be built up enough to start playback after 5 minutes but also whether the link can sustain a sufficient buffer fill level to allow continued playback for the duration of the video. This cannot be actually determined since it is dependent on future events but a prediction can be made based on the currently available bandwidth and the profile of the link behaviour at different times as in the second embodiment.

In the case of streaming, content will be displayed as being available within five minutes if the content data can be streamed faster than it can be consumed as the buffer can be filled initially without delay and will always be full.

If the video data for a particular piece of content cannot be buffered immediately to allow instant streaming, but the buffer can be sufficiently filled and sustained if the user waits after a predetermined period of time, then the media clip is presented as a delayed viewing article.

In either case, if the user selects a streaming clip, the local node initiates a request for that file to be delivered via streaming.

### Fourth Embodiment

In the above embodiments, the mesh formed of interconnected nodes monitor the location of media content available on the mesh and monitor the bandwidth between each node in the mesh in order to calculate the likely time required to transfer the clip to a user device connected to a node. The non-local content remains on the remote nodes and needs to be transferred each time it is requested.

In the fourth embodiment, the number of clips presented in the "available in five minutes" group is increased because the home nodes have caches for caching parts of the content available on other parts of the mesh. This improves the user experience as content is available more regularly.

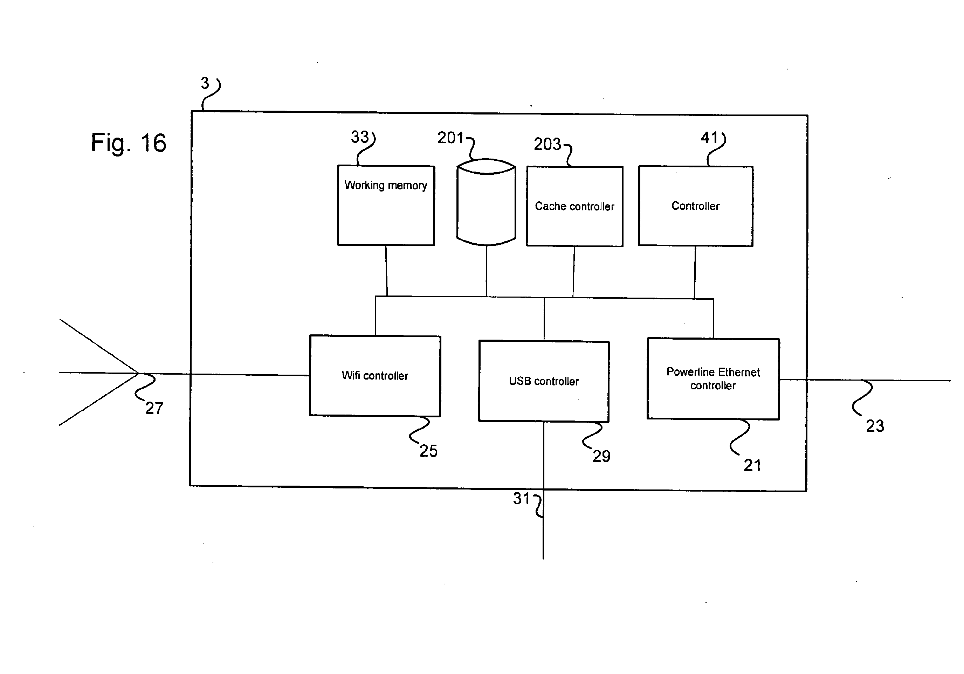

Figure 16 shows the structure of each home node in the fourth embodiment. The components of the home node are similar to that in the first embodiment and common components will not be described again.

The home node differs from the nodes of the first embodiment by the inclusion of a cache 201 and a cache controller 203. In the fourth embodiment, the cache is a 16GB Compact Flash card.

The main function of the cache controller 203 is to select media clips to be placed in the cache 201 such that cached clips can be provided to a requesting user device from the cache memory 201 of the local node instead of being transferred over the mesh. A cache hit occurs when the requested media is in the cache.

The nodes coordinate with each other to ensure a synchronous cache between all nodes in the mesh.

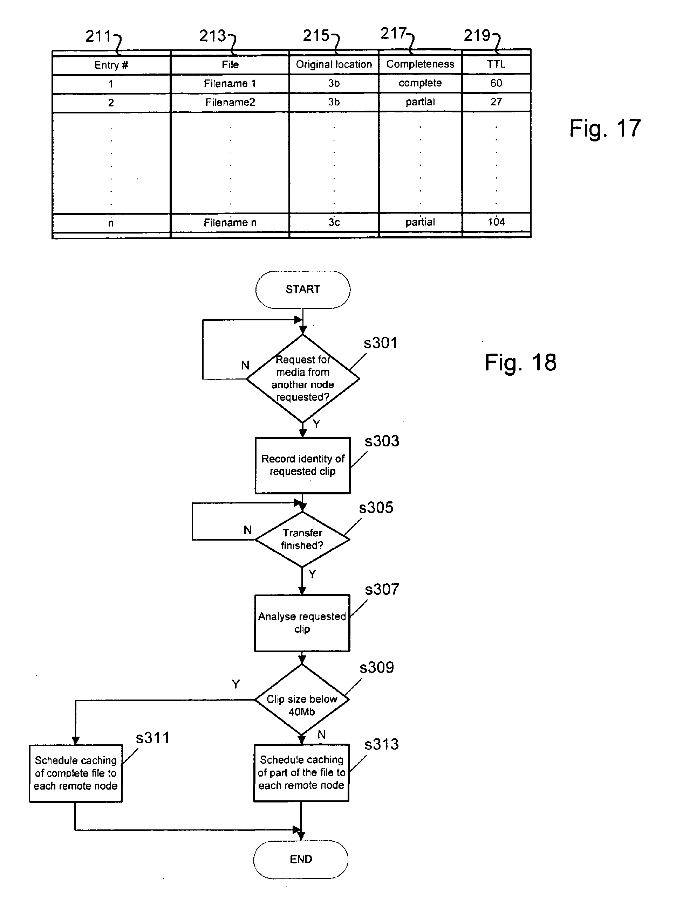

Figure 17 shows the contents of an example cache for node 3a. The cache contains fields for the entry number 211 in the cache, the file being cached 213, the location 215 of the original file, an indication of whether the cached content is the complete file or a partial file and a Time-To-Live value 217.

In this embodiment, as is common with all caching schemes, the clips which are cached and the manner in which they are cached depends on the popularity of the content and hence the likelihood of a cache hit. Other factors include the size of the file and the bandwidth available on the network. In particular, media clips may be either:
cached in their entirety (complete);
partially cached; or
not cached.

Clips which are completely cached are typically small in size or are very popular.

Long clips which are popular may be too large to fit in the cache. In these cases, only part of the file, for example the first 5 minutes of the media clip is cached so that playback can begin immediately from the local node while the remainder of the file is transferred to the local node.

Clips which are not popular or are small and connected to all nodes via fast links may not be cached to save space on the cache.

To ensure that stale items in the cache are removed, each cached media file is associated with a Time to Live (TTL) value. This TTL value does not relate to hops across the network but instead contains an expiry time in seconds after which it should be removed. When a cached clip is requested, the TTL value is reset to its original value so that popular clips remain in the cache.

When a user requests a content listing, the node processing is generally similar to the previous embodiments but includes the step of determining which clips are cached and therefore don't require a calculation of the time required for transfer over the mesh. These items are grouped into the "available in five minutes" group.

As mentioned above, the cache controller of each node is responsible for deciding whether to send clips to other nodes for caching and for deciding when to remove clips which are no longer need to be cached, in a decentralised manner. As with the first embodiment, each node is aware of the content available on its connected storage devices and sends a message to the other nodes containing a listing of the available media. In addition, the respective cache controller takes responsibility for updating the other caches in the home nodes and in particular for scheduling transfers of cache content to other nodes at a predetermined trickle bandwidth.

The processing of the cache controller is described with reference to Figure 18. In step s301, the cache controller checks if a request for local content has been made. In the case of node 3a, this would be a request from any of nodes 3b, 3c or 3d for content available on the hard drive of computer 13a. This test loops until a request is received.

When a request has been received, the identity of the requested file is logged in step s303. The cache controller 203 then waits until the transfer of the requested content has completed in step s305. This is to ensure that the requested content is delivered to the user without delay.

Once the transfer has completed, the cache controller can then analyse the requested clip in step s307 to determine characteristics about the file to decide whether it should be sent to the other nodes for caching. In this simple example it tests in step 309 the size of the file. If it is smaller than 40Mb in size then in step s311, the cache controller 203 schedules caching of the complete file to each of the remote nodes 3b, 3c and 3d. Alternatively, if it is larger than 40Mb in size then in step s313, the cache controller 203 schedules caching of only the first 40Mb of the file to each of the remote nodes 3b, 3c and 3d.

The file is then transferred to each of the other nodes during idle periods and a TTL value is initially set at 60 minutes.

Once content has been cached, the nodes can deliver content to a requesting user without first transferring that content from the mesh. In order to determine the popularity of cached files, the nodes send messages to each other whenever a cache hit occurs.

The node which introduces a content clip to the caches in the mesh is responsible for checking the validity of the clip. When a cache hit occurs for content that is stored on the hard drive of computer 13a, node 3a is informed of the hit and sends a message to the other nodes to reset the TTL value of the cached clip. When the number of hits exceeds a threshold value, the TTL value is increased. For example, in Figure 17, file n is very popular and therefore the TTL has risen to 104 minutes.

Conversely, cached files which are not popular need to be revalidated or removed to make space for new files. In this embodiment, if the TTL for a cached item expires, it is removed from the cache.

### Alternatives and Modifications

The above embodiments are concerned with processing video files to group them in accordance with whether or not they can be displayed to the user within five minutes. This determination is made based on knowledge of the speed and quality of the links between storage locations of the videos and the requesting device and also patterns in behaviour of those links.

This is particularly advantageous for video playback since the nature of the material is time sensitive. It is better to wait initially and get smooth playback throughout the video than to watch a jittery video.

Clearly other time-sensitive multimedia elements such as audio would also benefit whether the entire audio file is transferred or streamed although the bandwidth requirements are less severe.

Non real-time media can also be delivered in this way such that the user can see an estimate of how long a transfer will take before initiating the transfer.

In the embodiments, the system groups the media into those that can be displayed within five minutes and those that cannot. The skilled person will appreciate that other groupings corresponding to longer or shorter periods of time can be set. Furthermore, to provide a more detailed view of the network media to the user, more than two groupings are provided in a further alternative. In this alternative, the media is grouped into: available immediately, available within two minutes, available within 5 minutes, available within 10 minutes and available after ten minutes. This provides the user with a better estimate of how long they would need to wait for content to be delivered.

In the embodiments, the user devices are connected to the nodes using a wired USB and Firewire connections to ensure that the final link is not a bottleneck in the delivery of content. In an alternative, some of the mobile user devices connect over wireless links such as Near Field Communication (NFC) and Worldwide Inter-Operability for Microwave Access (WiMax) which support fast data rates so that the final link is not a bottleneck despite being wireless. In a further alternative, the mobile user devices connect to the nodes using WLAN (802.11a/b/g) and therefore the nodes may need to factor in the bandwidth of the WLAN link when determining the delivery times of content to the user.

In the embodiments, the links in the mesh were formed of PoE links having a theoretical bandwidth of 200Mbps and 802.11g WLAN having a bandwidth of 54Mbps. It will be clear to the skilled person that different technologies could be used such as 802.11 n. Clearly the types of connection will vary from home to home and whilst the theoretically fastest connection will be generally used, the system takes into account variations in the true bandwidth in order to provide the fastest service possible.

## Claims

1. A method for listing content on a network of storage devices and user devices connected to at least two interconnected nodes, the method being performed at each node and comprising:
maintaining a table of content available in the network and the location of each piece of content within the network;
periodically calculating the current bandwidth available for data transfer between each connected node;
upon receiving a request from a user device for a listing of content on the network, estimating the time required to retrieve each piece of content in the network;
grouping the content according to the estimated time required to deliver each piece of content to the requesting user device; and
presenting the grouped content listing to the user, such that for any piece of content the user is provided with an indication of the likely amount of time required for delivery of that content prior to actual selection.

2. A method according to claim 1, wherein at least two nodes are interconnected via two different network links and the method further comprises calculating the bandwidth over both links and choosing the fastest link.

3. A method according to any preceding claim, further comprising maintaining a history of the bandwidth to the remote node over a period of time.

4. A method according to any preceding claim wherein the content is multimedia content and the method further comprising presenting the multimedia content to the user.

5. A method according to claim 4 wherein the multimedia content is streamed to the user.

6. A method according to any preceding claim wherein at least some of the nodes contain content caches and cache controllers and further comprising the step of caching and managing content caches.

7. A method according to any preceding claim, further comprising:
receiving a content selection message for content; and
managing transfer of the selected content from the network to the user device

8. A system for managing content; the system comprising:
at least one user device;
at least one storage device;
at least two interconnected nodes, the user being connected to a first node and the storage device connected to a second node;
each node having:
a connectivity table storing data relating to other connected nodes;
a content table storing a list of the content available on the network;
a bandwidth assessor for periodically calculating the bandwidth available for data transfer between each node and storing the result in the connectivity table;
a content searcher for locating content stored locally to the node and also remotely stored content and storing information about the located content in the content table; and
a list generator for estimating a time to be taken to transfer each piece of content from the network to a requesting user device and grouping the content in accordance with the determined time; and
a user interface for presenting the grouped content list to a user device.

9. A system according to claim 8, wherein the at least two nodes are interconnected via two different network links and the bandwidth assessor is operable to calculate the bandwidth available over both links and to choose the highest capacity network link.

10. A system according to claim 8 or 9, further comprising a history log containing the bandwidth to the other nodes in the network over a period of time.

11. A system according to any of claims 8 to 10, wherein the content is multimedia content.

12. A system according to claim 11, further comprising a streamer for streaming the multimedia content to the user device.

13. A system according to any preceding claim wherein at least some of the nodes further comprise:
a content cache; and
cache controller being arranged to:
select locally stored content for caching at other nodes managing content caches;
transferring the selected data to the content caches of the remote nodes during idle periods.

14. A system according to any of claims 8 to 13, further comprising:
means for receiving a content selection message for content; and
means for managing transfer of the content from the network to the user device.

15. A network node comprising:
a connectivity table for storing data relating to other connected nodes;
a content table for storing a list of the content available on a network;
at least one network interface for connecting to other network nodes;
a bandwidth assessor operable to calculate the bandwidth available for data transfer between a node connected to the at least one network interface and storing the result in the connectivity table;
a content searcher for locating content stored locally to the node and also remotely stored content and for storing information about the located content in the content table;
a list generator for estimating a time to be taken to transfer each piece of content from the network to a requesting user device and grouping the content in accordance with the determined time; and
a user interface for presenting the grouped content list to a user device.
